# EUROPÄISCHE PATENTSCHRIFT

(11) **EP 2 815 861 B1**
(45) Veröffentlichungstag und Bekanntmachung des Hinweises auf die Patenterteilung: **07.09.2016**
(21) Anmeldenummer: 13172547.5
(22) Anmeldetag: 18.06.2013
(51) Int. Cl.: B29C 33/30, B29C 70/42, B29D 99/00, F03D 1/06

(54) **Verfahren und Formwerkzeug zur Herstellung eines Gurtsegments für ein Windenergieanlagenrotorblatt**
Method and forming tool for producing a chord segment for a wind energy plant rotor blade
Procédé et outil de formage pour la fabrication d'un segment de membrure pour une pale de rotor d'installation éolienne

(43) Veröffentlichungstag der Anmeldung: 24.12.2014
(73) Patentinhaber: Nordex Energy GmbH, 22419 Hamburg (DE)
(72) Erfinder: Frankowski, Marco, 18347 Ostseebad Wustrom (DE); Lipka, Thomas, 18057 Rostock (DE)
(74) Vertreter: Hauck Patentanwaltspartnerschaft mbB

(56) Entgegenhaltungen:
- WO-A1-2006/002621
- DE-A1-102010 015 392

## Beschreibung

Die Erfindung betrifft ein Verfahren zur Herstellung eines Gurtsegments für ein Windenergieanlagenrotorblatt, wobei das Windenergieanlagenrotorblatt aus einem Längsabschnitt, der das Gurtsegment aufweist, und mindestens einem weiteren Längsabschnitt, der ein weiteres Gurtsegment aufweist, zusammengefügt wird. Das Gurtsegment wird in einem Formwerkzeug hergestellt und weist einen Verbindungsabschnitt zur Verbindung mit dem weiteren Gurtsegment auf. Die Erfindung betrifft außerdem ein Formwerkzeug zur Herstellung eines solchen Gurtsegments

Windenergieanlagenrotorblätter moderner Windenergieanlagen weisen mit zunehmender Anlagenleistung immer größere Abmessungen auf, häufig Längen von beispielsweise 60 m oder mehr. Dies erschwert nicht nur die Fertigung der Rotorblätter, sondern auch deren Transport und die Montage am Errichtungsort der Windenergieanlage. Insbesondere im Hinblick auf den Transport ist es bekannt geworden, Windenergieanlagenrotorblätter am Errichtungsort der Windenergieanlage aus mehreren vorgefertigten Blattteilen zusammenzufügen. Derartige Rotorblätter weisen insbesondere mehrere Längsabschnitte auf, die jeweils aus einer Tragstruktur und einer aerodynamischen Hülle bestehen. Zur Verbindung der beiden Längsabschnitte sind unterschiedliche Konzepte bekannt geworden. Hierzu zählen kraftschlüssige Verbindungen, beispielsweise unter Zuhilfenahme von Schraubbolzen oder Spannseilen. Ebenfalls bekannt ist ein Verkleben der Längsabschnitte.

Aus der Druckschrift WO 2009/030228 A1 ist ein in zwei Längsabschnitte geteiltes Windenergieanlagenrotorblatt bekannt geworden. In einem Verbindungsbereich stehen aus vorgefertigten Längsabschnitten trockene Verstärkungsfasern hervor, die beim Zusammenfügen der beiden Längsabschnitte in ein Kunststoffmaterial eingebettet werden sollen.

Aus den beiden Druckschriften EP 1 485 611 B1 und EP 1 485 610 B1 sind einteilige Windenergieanlagenrotorblätter bekannt geworden, die in zwei unterschiedlichen Längsabschnitten unterschiedliche Fasertypen aufweisen. Nahe der Blattspitze sollen Kohlenstofffasern verwendet werden, nahe der Blattwurzel Glasfasern. In einem Übergangsbereich gehen die Anteile der beiden Fasertypen ineinander über.

Aus der Druckschrift DE 10 2010 015 392 A1 ist ein in zwei Längsabschnitte geteiltes Windenergieanlagenrotorblatt bekannt geworden, dessen Hauptgurte ein lamellenförmiges Verbindungselement aufweisen. Zwei Hauptgurte auf Druck- und Saugseite des Rotorblatts können in Lamellenform aufgefächert und miteinander verklebt werden.

Aus der Druckschrift EP 1 761 702 B1 sind in zwei Längsabschnitte geteilte Rotorblätter bekannt geworden, deren Hauptgurte oder Holme im ausgehärteten Zustand mit einer Verzahnung versehen werden. Die so ausgebildeten Zähne oder Finger werden miteinander verklebt.

Aus der Druckschrift EP 1 603 735 B1 sind eine Verbindung zwischen Verbundteilen mit unterschiedlichen Eigenschaften und Verfahren zu deren Herstellung bekannt geworden. Hierzu wird zwischen den beiden Verbundteilen ein Übergangsbereich geschaffen, der unterschiedliche Fasermaterialien aufweist.

Aus der Druckschrift WO 2010/065928 A1 sind Windenergieanlagenrotorblätter bekannt geworden, deren Gurte aus mehreren Schichten von Verstärkungsfasern aufgebaut sind. Vorzugsweise werden hierzu vorgefertigte Rechteckprofile, sogenannte pultrudierte Planken, miteinander verklebt. Durch ein solches Verkleben unterschiedlich langer Planken entsteht ein Verbindungsabschnitt, der mit einem weiteren Gurtsegment verklebt werden kann.

Davon ausgehend ist es die Aufgabe der Erfindung, ein Verfahren und ein Formwerkzeug zur Herstellung eines Gurtsegments für ein Windenergieanlagenrotorblatt zur Verfügung zu stellen, die eine besonders einfache, zuverlässige und materialsparende Fertigung eines Gurtsegments mit optimalen Festigkeitseigenschaften ermöglichen, sowie ein Gurtsegment mit diesen Eigenschaften.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zur Herstellung eines Gurtsegments für ein Windenergieanlagenrotorblatt, wobei das Windenergieanlagenrotorblatt aus einem Längsabschnitt, der das Gurtsegment aufweist, und mindestens einem weiteren Längsabschnitt, der ein weiteres Gurtsegment aufweist, zusammengefügt wird, wobei das Gurtsegment in einem Formwerkzeug hergestellt wird und einen Verbindungsabschnitt zur Verbindung mit dem weiteren Gurtsegment aufweist und das Verfahren die folgenden Schritte umfasst:
a) Bereitstellen eines ersten Formwerkzeugteils,
b) Anordnen eines ersten Lagenpakets von Verstärkungsfasern in dem ersten Formwerkzeugteil und Anordnen eines zweiten Formwerkzeugteils, so dass zwischen dem ersten Formwerkzeugteil und dem zweiten Formwerkzeugteil ein erster Zwischenraum ausgebildet ist, in dem ein Teil des ersten Lagenpakets der Verstärkungsfasern angeordnet ist,
c) Anordnen eines zweiten Lagenpakets von Verstärkungsfasern und Anordnen eines dritten Formwerkzeugteils, so dass zwischen dem zweiten Formwerkzeugteil und dem dritten Formwerkzeugteil ein zweiter Zwischenraum ausgebildet ist, in dem ein Teil des zweiten Lagenpakets der Verstärkungsfasern angeordnet ist,
d) Aushärten eines die Verstärkungsfasern umgebenden Kunststoffmaterials, und
e) Entformen des Gurtsegments,
wobei der erste und zweite Zwischenraum so geformt und relativ zueinander angeordnet sind, dass die darin gefertigten Abschnitte des Gurtsegments den Verbindungsabschnitt zur Verbindung mit dem weiteren Verbindungsabschnitt des weiteren Gurtsegments bilden.

Das Windenergieanlagenrotorblatt kann für eine Windenergieanlage mit einem Rotor mit horizontaler Achse bestimmt sein. Es kann aus einem faserverstärkten Kunststoffmaterial gefertigt sein, beispielsweise in einem Vakuuminfusionsverfahren. Der Längsabschnitt und der weitere Längsabschnitt des Windenergieanlagenrotorblatts können jeweils aus zwei vorgefertigten Halbschalen zusammengefügt sein, insbesondere aus einer druckseitigen und einer saugseitigen Halbschale. Das Windenergieanlagenrotorblatt hat eine Tragstruktur und eine aerodynamische Hülle. Die Tragstruktur weist mindestens einen Gurt auf, insbesondere einen druckseitigen Hauptgurt und einen saugseitigen Hauptgurt. Ein weiterer Gurt oder mehrere weitere Gurte können hinzukommen, beispielsweise ein Endkantengurt im Bereich der Profilendkante. Der oder die Gurte verlaufen im Wesentlichen in Längsrichtung des Windenergieanlagenrotorblatts. Die Tragstruktur des Windenergieanlagenrotorblatts kann weitere Elemente aufweisen, beispielsweise einen oder mehrere Stege, insbesondere angeordnet zwischen einem druckseitigen und einem saugseitigen Hauptgurt. Die aerodynamische Hülle des Windenergieanlagenrotorblatts kann insbesondere von den genannten Halbschalen gebildet sein und ist fest mit den Gurten verbunden. Zum Zusammenfügen des Windenergieanlagenrotorblatts aus dem Längsabschnitt und dem weiteren Längsabschnitt ist vorgesehen, das Gurtsegment des Längsabschnitts und das weitere Gurtsegment des weiteren Längsabschnitts miteinander zu verbinden. Verbleibt anschließend eine Lücke in der aerodynamischen Hülle, kann diese nachträglich geschlossen werden. Zur Verbindung der beiden Gurtsegmente weist das Gurtsegment des Längsabschnitts einen Verbindungsabschnitt auf. Das weitere Gurtsegment des weiteren Längsabschnitts weist einen weiteren Verbindungsabschnitt auf, der so auf den Verbindungsabschnitt des Gurtsegments abgestimmt ist, dass eine Verbindung der beiden Gurtsegmente mit ausreichender Festigkeit erzielt werden kann, insbesondere durch Verkleben.

Die genannten Lagenpakete von Verstärkungsfasern können eine oder mehrere Lagen aus Verstärkungsfasern aufweisen. Die Lagen können aus einzelnen Rovings, Gelegen oder Geweben der Verstärkungsfasern aufgebaut sein, insbesondere in einer unidirektionalen Anordnung entlang einer Längsrichtung des Gurtsegments. Beim Anordnen in dem Formwerkzeugteil kann jede Lage einzeln oder auch ein aus mehreren Lagen vorbereitetes Lagenpaket in seiner Gesamtheit gehandhabt werden. Bei den Verstärkungsfasern kann es sich um ein beliebiges Fasermaterial handeln, beispielsweise um Glasfasern, Kohlenstofffasern oder Fasern aus einem Kunststoffmaterial.

Die Verfahrensschritte a) bis e) können in der angegebenen Reihenfolge ausgeführt werden. In jedem der Schritte b) und c) kann zuerst das jeweilige Lagenpaket der Verstärkungsfasern eingelegt und anschließend das jeweilige Formwerkzeugteil angeordnet werden. Ebenfalls möglich ist es, die Verstärkungsfasern des jeweiligen Lagenpakets oder einen Teil davon erst nach dem Anordnen des im betreffenden Verfahrensschritt genannten Formwerkzeugteils einzulegen, beispielsweise indem ein Teil der Verstärkungsfasern in den bereits ausgebildeten Zwischenraum eingeschoben wird.

Vor dem Aushärten des die Verstärkungsfasern umgebenden Kunststoffmaterials sind die Verstärkungsfasern bereits in das Kunststoffmaterial eingebettet, sodass beim Aushärten ein festes Faserverbundmaterial entsteht. Das Kunststoffmaterial kann beispielsweise ein Epoxid- oder Polyesterharz oder ein sonstiges aushärtbares Kunststoffmaterial aufweisen.

Das erste, zweite und dritte Formwerkzeugteil gemeinsam bilden in der vorgesehenen Anordnung zwei Zwischenräume aus, in die jeweils ein Lagenpaket der Verstärkungsfasern zumindest teilweise hineinragt. Dadurch entsteht beim Aushärten des Kunststoffmaterials in jedem der Zwischenräume ein Zahn, der großflächig mit dem weiteren Verbindungsabschnitt verklebt werden kann, insbesondere mit einem oder mehreren komplementär angeordneten und geformten Zähnen des weiteren Verbindungsabschnitts. Die in den Zwischenräumen ausgebildeten Zähne bilden gemeinsam den Verbindungsabschnitt. Es versteht sich, dass das Verfahren nicht auf die im Anspruch genannte Anzahl von Lagenpaketen, Formwerkzeugteilen bzw. Zwischenräumen beschränkt ist, sondern ebenso gut mit einer größeren Anzahl von Lagenpaketen, Formwerkzeugteilen und Zwischenräumen und darin ausgebildeten Zähnen ausgeführt werden kann. In diesem Fall kann zwischen den Verfahrensschritten c) und d) ein weiterer Schritt ausgeführt werden, in dem ein drittes Lagenpaket von Verstärkungsfasern und ein viertes Formwerkzeugteil angeordnet werden, so dass zwischen dem dritten Formwerkzeugteil und dem vierten Formwerkzeugteil ein dritter Zwischenraum ausgebildet wird, in dem ein Teil des dritten Lagenpakets der Verstärkungsfasern angeordnet wird, und so fort. Beispielsweise können auf diese Weise insgesamt nicht nur zwei, sondern drei bis 50 Zähne, bevorzugt etwa fünf bis 15 Zähne, entstehen. Es versteht sich, dass auch die Merkmale der im Folgenden erläuterten Ausgestaltungen des Verfahrens, des Formwerkzeugs und des Gurtsegments an die gewünschte Anzahl von Zähnen angepasst werden können.

Dass die in den Zwischenräumen der Formwerkzeugteile gefertigten Abschnitte des Gurtsegments einen Verbindungsabschnitt zur Verbindung mit dem weiteren Verbindungsabschnitt des weiteren Gurtsegments bilden, bedeutet, dass der entstehende Verbindungsabschnitt mit einem komplementär geformten, weiteren Verbindungsabschnitt zusammengesetzt werden kann, insbesondere durch Zusammenschieben der beiden Gurtsegmente. Dies kann beispielsweise dadurch erreicht werden, dass alle Zwischenräume der Formwerkzeugteile im Wesentlichen parallel angeordnet sind bzw. seitliche Flächen der Zwischenräume bzw. Flanken der in diesen Zwischenräumen ausgebildeten Zähne des Gurtsegments im Wesentlichen parallel zu einer entsprechenden Flanke eines benachbarten Zahns bzw. aller weiteren Zähne ausgebildet sind. Allerdings sind auch abweichende Formgebungen der Zwischenräume und der darin ausgebildeten Zähne möglich, ggf. einschließlich gekrümmter Flächen, solange ein Zusammensetzen des Verbindungsabschnitts und eines komplementär geformten, weiteren Verbindungsabschnitts ohne weiteres möglich ist.

Das Verfahren ermöglicht eine besonders einfache und zuverlässige Herstellung von Gurtsegmenten. Insbesondere kann die gewünschte Geometrie des Verbindungsabschnitts und dessen relative Anordnung zum weiteren Verlauf des Gurtsegments exakt eingehalten werden. Hinsichtlich der Formgebung des Gurtsegments ergeben sich im Vergleich zu einem herkömmlichen, einteiligen Gurt keinerlei Beschränkungen. Möglich ist insbesondere eine komplexe und zweifache Krümmung des Gurtsegments in unterschiedlichen Raumrichtungen. Mit einer Krümmung in einer bestimmten Richtung ist stets gemeint, dass das betreffende Bauteil in einer Schnittebene, die die bestimmte Richtung einschließt, gekrümmt ist. Beispielsweise wird ein zur Druckseite hin vorgebogenes Rotorblatt als in Längsrichtung des Rotorblatts gekrümmt bezeichnet. Eine dem aerodynamischen Profil des Rotorblatts folgende Außenfläche eines Gurtsegments wird als in Querrichtung des Rotorblatts gekrümmt bezeichnet.

Die Zähne, Zahnflanken, Innenflächen und/oder Außenflächen des Gurtsegments können im Verbindungsabschnitt planar ausgeführt sein. Diese ebenen Flächen können außerhalb des Verbindungsabschnitts, also abseits des Überlappungsbereichs der Zähne, in einem Übergangsbereich in die dort vorhandene Krümmung des Gurtsegments überführt werden. Eine Länge des Übergangsabschnitts kann etwa das 0,5- bis 10-fache einer Länge des Verbindungsabschnitts betragen.

Ein besonderer Vorteil besteht darin, dass durch das Verfahren exakt vorherbestimmt ist, welche Verstärkungsfasern die Zähne des Verbindungsabschnitts bilden, so dass eine optimale Krafteinleitung vom Verbindungsabschnitt in das Gurtsegment gewährleistet werden kann. Insbesondere können im Wesentlichen alle in dem ersten und zweiten Lagenpaket enthaltenen Lagen oder Verstärkungsfasern bis in den Verbindungsabschnitt bzw. bis in einen der Zähne hineingeführt werden. Dies kann bei einer nachträglichen, spanenden Herstellung der Zähne nicht zuverlässig erreicht werden.

Das Verfahren ist außerdem besonders materialsparend, weil die Verstärkungsfasern bedarfsgerecht in das Formwerkzeug eingelegt werden und nicht, wie im Stand der Technik zum Teil vorgesehen, bei einer spanenden Nachbearbeitung des ausgehärteten Werkstücks Verluste entstehen. Das Verfahren ermöglicht eine endkonturnahe Fertigung einer komplexen Geometrie, also die Fertigung eines Gurtsegments, dessen äußere Fläche unmittelbar an eine aerodynamische Oberfläche des Rotorblatts angrenzen oder in geringem und/oder gleichmäßigem Abstand davon angeordnet werden kann.

In einer Ausgestaltung des Verfahrens erfolgt beim Anordnen des zweiten und dritten Formwerkzeugteils eine Ausrichtung und/oder Befestigung des zweiten und/oder dritten Formwerkzeugteils an einem der zuvor angeordneten Formwerkzeugteile. Dadurch wird sichergestellt, dass sich während des Aushärtens des Kunststoffmaterials alle Formwerkzeugteile in der vorgesehenen Anordnung befinden.

In einer Ausgestaltung weisen das erste und zweite Lagenpaket der Verstärkungsfasern jeweils einen ersten Fasertyp auf und zwischen dem ersten und zweiten Lagenpaket wird ein weiteres Lagenpaket von Verstärkungsfasern angeordnet, das einen zweiten Fasertyp aufweist, wobei der erste Fasertyp eine höhere Festigkeit und/oder eine höhere Steifigkeit aufweist als der zweite Fasertyp und/oder das erste und zweite Lagenpaket jeweils eine größere Dicke aufweisen als das eine weitere Lagenpaket. Beispielsweise kann der erste Fasertyp eine Kohlenstofffaser und der zweite Fasertyp eine Glasfaser sein. Ebenfalls möglich ist die Verwendung unterschiedlicher Kohlenstofffasertypen als erster und zweiter Fasertyp. Es versteht sich, dass jedes der genannten Lagenpakete auch ausschließlich den jeweils genannten Fasertyp aufweisen kann. Bei dieser Ausgestaltung wirken die weiteren Lagenpakete vorwiegend als Rissstopper, verhindern also eine Rissbildung zwischen dem ersten und zweiten Lagenpaket der Verstärkungsfasern unter Belastung. Die Hauptlasten werden hingegen von dem ersten und zweiten Lagenpaket aufgenommen, also von dem ersten Fasertyp mit der höheren Festigkeit, Steifigkeit und/oder größeren Dicke. Bei der Ausbildung von mehr als zwei Zähnen und Verwendung einer entsprechenden Anzahl von Lagenpaketen mit dem ersten Fasertyp kann zwischen jeweils zwei dieser Lagenpakete ein weiteres Lagenpaket mit dem zweiten Fasertyp vorgesehen werden, so dass sich Lagenpakete mit dem ersten und zweiten Fasertyp stets abwechseln.

In einer Ausgestaltung wird das weitere Lagenpaket so in das Formwerkzeug eingelegt, dass es in keinen der Zwischenräume hineinragt. Die für die Festigkeit der Verbindung zwischen Gurtsegment und weiterem Gurtsegment maßgeblichen Verbindungsabschnitte werden also ausschließlich von den Lagenpaketen von Verstärkungsfasern mit dem ersten Fasertyp gebildet, sodass eine optimale Festigkeit erreicht wird.

Die Lagenpakete der Verstärkungsfasern können in Form von mit dem Kunststoffmaterial vorimprägnierten Faserpaketen in das Formwerkzeug eingelegt werden. Die vorimprägnierten Faserpakete werden auch als Prepregs bezeichnet. Durch die Verwendung solcher Prepregs können viele Parameter des Werkstoffs exakt eingehalten werden, beispielsweise die vorgesehene Orientierung der Verstärkungsfasern und die relativen Faser-/Kunststoffanteile. Bei der Verwendung von Prepregs kann das Aushärten des Kunststoffmaterials unter Zuhilfenahme von erhöhter Temperatur und/oder erhöhtem Druck erfolgen, beispielsweise in einem Autoklaven.

Alternativ können die Verstärkungsfasern trocken in das Formwerkzeug eingelegt werden. Anschließend wird das Kunststoffmaterial in flüssiger Form in einem Vakuuminfusionsverfahren oder in einem Injektionsverfahren in das Formwerkzeug eingebracht, sodass es die Verstärkungsfasern umgibt. Beim Einbringen des Kunststoffmaterials in einem Vakuuminfusionsverfahren wird das Formwerkzeug luftdicht verschlossen und im Innenraum wird ein Vakuum erzeugt, insbesondere mithilfe einer Vakuumpumpe. Das flüssige Kunststoffmaterial strömt dann über Kanäle in das Formwerkzeug ein. Bei einem Injektionsverfahren steht das in das Formwerkzeug einströmende Kunststoffmaterial zusätzlich unter einem erhöhten Druck. In beiden Fällen sind die Verstärkungsfasern nach dem Einströmen des Kunststoffmaterials vollständig in eine Kunststoffmatrix eingebettet, sodass beim Aushärten des Kunststoffmaterials ein Verbundwerkstoff mit hoher Festigkeit entsteht.

In einer Ausgestaltung des Verfahrens weisen das erste und zweite Lagenpaket der Verstärkungsfasern jeweils eine Vielzahl von Lagen von Verstärkungsfasern auf, wobei die einzelnen Lagen unterschiedlich weit in den betreffenden Zwischenraum hinein eingelegt werden. Die Verstärkungsfasern einzelner Lagen enden also abgestuft und ragen unterschiedlich weit in den Zwischenraum hinein. Dies ist insbesondere bei einem sich zum Ende des Gurtsegments hin verjüngenden Verlauf der einzelnen Zähne sinnvoll.

In einer Ausgestaltung werden beim Entformen des Gurtsegments das zweite und/oder dritte Formwerkzeugteil getrennt von dem ersten Formwerkzeugteil von dem Gurtsegment entfernt. Die Verwendung mehrerer Formwerkzeugteile ermöglicht also nicht nur ein optimales Einbringen der Verstärkungsfasern der einzelnen Lagen in das Formwerkzeug, sondern vereinfacht auch das Entformen insbesondere bei langen Verbindungsabschnitten oder bei Zähnen mit einer im Verhältnis zu ihrer Länge geringen Dicke.

Die oben angegebene Aufgabe wird ebenfalls gelöst durch das Formwerkzeug mit den Merkmalen des Anspruchs 7. Vorteilhafte Ausgestaltungen sind in den sich anschließenden Unteransprüchen angegeben.

Das Formwerkzeug dient zur Herstellung eines Gurtsegments für ein Windenergieanlagenrotorblatt und weist Folgendes auf:
- ein erstes Formwerkzeugteil, ein zweites Formwerkzeugteil und ein drittes Formwerkzeugteil,
- Mittel, mit denen die Formwerkzeugteile relativ zueinander in einer vorgegebenen Anordnung angeordnet und befestigt werden können, so dass zwischen dem ersten Formwerkzeugteil und dem zweiten Formwerkzeugteil ein erster Zwischenraum und zwischen dem zweiten Formwerkzeugteil und dem dritten Formwerkzeugteil ein zweiter Zwischenraum ausgebildet ist,
- wobei die Zwischenräume so geformt und relativ zueinander angeordnet sind, dass darin gefertigte Abschnitte des Gurtsegments einen Verbindungsabschnitt zur Verbindung mit einem weiteren Verbindungsabschnitt eines weiteren Gurtsegments bilden.

Zur Erläuterung der Merkmale des Formwerkzeugs wird auf die vorstehenden Erläuterungen der korrespondierenden Verfahrensmerkmale verwiesen. Dies gilt auch für die im Zusammenhang mit dem Verfahren bereits aufgezeigten Vorteile der Erfindung. Insbesondere kann das Formwerkzeug weitere Formwerkzeugteile aufweisen, zwischen denen weitere Zwischenräume ausgebildet sind, wie es zur bereits erläuterten Herstellung von Gurtsegmenten mit mehr als zwei Zähnen sinnvoll ist.

In einer Ausgestaltung des Formwerkzeugs weist das erste Formwerkzeugteil eine Innenseite mit einer Länge auf, die größer oder gleich der Länge des Gurtsegments ist. Diese Innenseite des ersten Formwerkzeugteils gibt insbesondere die Geometrie einer Außenseite des darin gefertigten Gurtsegments vor. Das erste Formwerkzeugteil kann einteilig oder mehrteilig ausgebildet sein.

In einer Ausgestaltung ist die Innenseite in einer Längsrichtung des ersten Formwerkzeugteils und/oder in einer Querrichtung des ersten Formwerkzeugteils gekrümmt. Insbesondere kann die Innenseite komplementär zu einer aerodynamisch wirksamen Außenseite des Windenergieanlagenrotorblatts geformt sein und das in dem Formwerkzeugteil gefertigte Gurtsegment kann an diese aerodynamische Fläche unmittelbar angrenzen oder in einem im Wesentlichen gleichmäßigen Abstand davon angeordnet sein.

In einer Ausgestaltung weisen die Mittel zur Anordnung und/oder Befestigung der Formwerkzeugteile Bohrungen, Nuten oder Ausnehmungen und in diese eingreifende Bolzen, Rippen oder Vorsprünge auf. Diese zusammenwirkenden Mittel ermöglichen eine exakte Positionierung der einzelnen Formwerkzeugteile relativ zueinander und ggf. zugleich eine Befestigung der Formwerkzeugteile untereinander. Es versteht sich, dass zur Befestigung auch gesonderte Befestigungsmittel verwendet werden können.

In einer Ausgestaltung weist das erste Formwerkzeugteil eine Gurtform auf und ein in die Gurtform einzulegendes Einlegeteil, wobei die Unterseite des Einlegeteils komplementär zu einer Innenfläche der Gurtform ausgebildet ist. Die Gurtform kann eine herkömmliche Gurtform zur Fertigung eines Gurts für ein nicht in Längsabschnitte unterteiltes Windenergieanlagenrotorblatt gleicher Geometrie sein. Dadurch kann die herkömmliche Gurtform für die Erfindung weiterverwendet werden.

In einer Ausgestaltung sind das zweite und dritte Formwerkzeugteil plattenförmig ausgebildet und weisen jeweils einen Abschnitt mit gleichmäßiger Dicke auf, sodass sie blockartig aufeinander gestapelt werden können. Insbesondere können die genannten Formwerkzeugteile alle identisch geformt sein. Dies vereinfacht das Anordnen der Formwerkzeugteile und auch deren Herstellung.

In einer weiterer Ausgestaltung wird ein Gurtsegment ist für ein Windenergieanlagenrotorblatt bestimmt, das aus einem Längsabschnitt, der das Gurtsegment aufweist, und mindestens einem weiteren Längsabschnitt, der ein weiteres Gurtsegment aufweist, zusammengefügt wird, und weist Folgendes auf:
- einen ersten Längsabschnitt, der eine Außenseite, eine Längsrichtung und eine orthogonal zu der Längsrichtung angeordnete Querrichtung aufweist und sich über einen Großteil der Länge des Gurtsegments erstreckt, wobei die Außenseite in der Längsrichtung und in der Querrichtung gekrümmt ist,
- einen Verbindungsabschnitt zur Verbindung mit dem weiteren Gurtsegment, der an einem Ende des Gurtsegments angeordnet ist und der mindestens einen ersten Zahn und einen zweiten Zahn aufweist, die benachbart angeordnet sind und zwischen denen ein Freiraum ausgebildet ist,
- wobei das Gurtsegment ein erstes Lagenpaket und ein zweites Lagenpaket von Verstärkungsfasern aufweist, wobei sich das erste Lagenpaket über die gesamte Länge des ersten Längsabschnitts und bis in den ersten Zahn des Verbindungsabschnitts hinein erstreckt und sich das zweite Lagenpaket über die gesamte Länge des ersten Längsabschnitts und bis in den zweiten Zahn des Verbindungsabschnitts hinein erstreckt.

Zur Erläuterung der Merkmale und Vorteile des Gurtsegments wird auf die vorstehenden Erläuterungen des Verfahrens und des Formwerkzeugs verwiesen. Besonderheiten des Gurtsegments bestehen in der zweifach gekrümmten Form der, Außenseite des ersten Längsabschnitts, wodurch eine endkonturnahe Anordnung des Gurtsegments innerhalb des Windenergieanlagenrotorblatts ermöglicht wird, und in den bis in die Zähne hineingeführten Lagenpaketen der Verstärkungsfasern.

In einer Ausgestaltung weisen das erste und zweite Lagenpaket der Verstärkungsfasem jeweils einen ersten Fasertyp auf und zwischen dem ersten Lagenpaket und dem zweiten Lagenpaket ist ein weiteres Lagenpaket von Verstärkungsfasern angeordnet, das einen zweiten Fasertyp aufweist, wobei der erste Fasertyp eine höhere Festigkeit und/oder eine höhere Steifigkeit aufweist als der zweite Fasertyp und/oder das erste und zweite Lagenpaket jeweils eine größere Dicke aufweisen als das weitere Lagenpaket. Zur Erläuterung dieser Ausgestaltung wird auf die vorstehenden Erläuterungen des korrespondierenden Verfahrensanspruchs verwiesen.

Das weitere Lagenpaket kann vor dem Verbindungsabschnitt bzw. unmittelbar daran angrenzend enden. Es erstreckt sich bevorzugt in keinen der Zähne hinein. Auch hierzu wird auf die vorstehenden Erläuterungen verwiesen.

In einer Ausgestaltung weist das Gurtsegment im ersten Längsabschnitt in einem Abstand von dem Verbindungsabschnitt und an einer unmittelbar an einen Wurzelbereich der Zähne angrenzenden Position gleichgroße Querschnittsflächen auf. Es gibt also keine Aufweitung des Querschnitts im Bereich des Verbindungsabschnitts oder in einem Übergangsbereich dorthin. Durch den besonderen Aufbau des Gurtsegments weist es dennoch eine ausreichende Festigkeit auch im Verbindungsbereich zu dem weiteren Gurtsegment auf.

Es versteht sich, dass die vorstehend erläuterten Elemente, insbesondere die im Einzelnen erläuterten Ausgestaltungen des Verfahrens, des Formwerkzeugs und des Gurtsegments beliebig miteinander kombinierbar sind. Insbesondere ist vorgesehen, das Gurtsegment mit dem erfindungsgemäßen Verfahren in dem erfindungsgemäßen Formwerkzeug herzustellen.

Nachfolgend wird die Erfindung anhand von in Figuren dargestellten Ausführungsbeispielen näher erläutert. Es zeigen:
- Fig. 1: ein Windenergieanlagenrotorblatt aus zwei Längsabschnitten in einer vereinfachten Ansicht auf die Profilnasenkante,
- Fig. 2: das Windenergieanlagenrotorblatt aus Fig. 1 in einer Ansicht auf die Druckseite,
- Fig. 3: eine Ausschnittsvergrößerung des in Fig. 1 gekennzeichneten Bereichs,
- Fig. 4: eine nochmals vergrößerte Darstellung des oberen Bereichs der Fig. 3,
- Fig. 5: eine alternative Ausgestaltung des in der Fig. 4 vergrößert dargestellten Verbindungsbereichs,
- Fig. 6: eine vereinfachte Darstellung zur Erläuterung des erfindungsgemäßen Verfahrens durch einen Teil eines Gurtsegments in einem Formwerkzeug in einem Längsschnitt,
- Fig. 7: einen Querschnitt entlang der in Fig. 6 mit A-A bezeichneten Ebene,
- Fig. 8: einen Querschnitt entlang der in Fig. 6 mit AB-AB bezeichneten Ebene,
- Fig. 9: einen Querschnitt entlang der in Fig. 6 mit AB'-AB' bezeichneten Ebene,
- Fig. 10: einen Querschnitt entlang der in Fig. 6 mit B-B bezeichneten Ebene,
- Fig. 11: eine Explosionsdarstellung von Teilen des Formwerkzeugs aus der Fig. 4,
- Fig. 12: eine Ansicht auf die Oberseite des in der Fig. 11 unten dargestellten Formwerkzeugteils,
- Fig. 13: eine perspektivische Ansicht auf die Unterseite des Formwerkzeugteils aus Fig. 12,
- Fig. 14: eine perspektivische Ansicht auf die Oberseite des oberen Formwerkzeugteils aus Fig. 4,
- Fig. 15: eine perspektivische Ansicht auf die Unterseite des Formwerkzeugteils aus Fig. 14,
- Fig. 16: eine schematische Darstellung eines aus zwei Längsabschnitten zusammengefügten Rotorblatts in einer vereinfachten Ansicht auf die Profilnasenkante,
- Fig. 17: eine Ansicht auf die Druckseite des Windenergieanlagenrotorblatts aus Fig. 16.

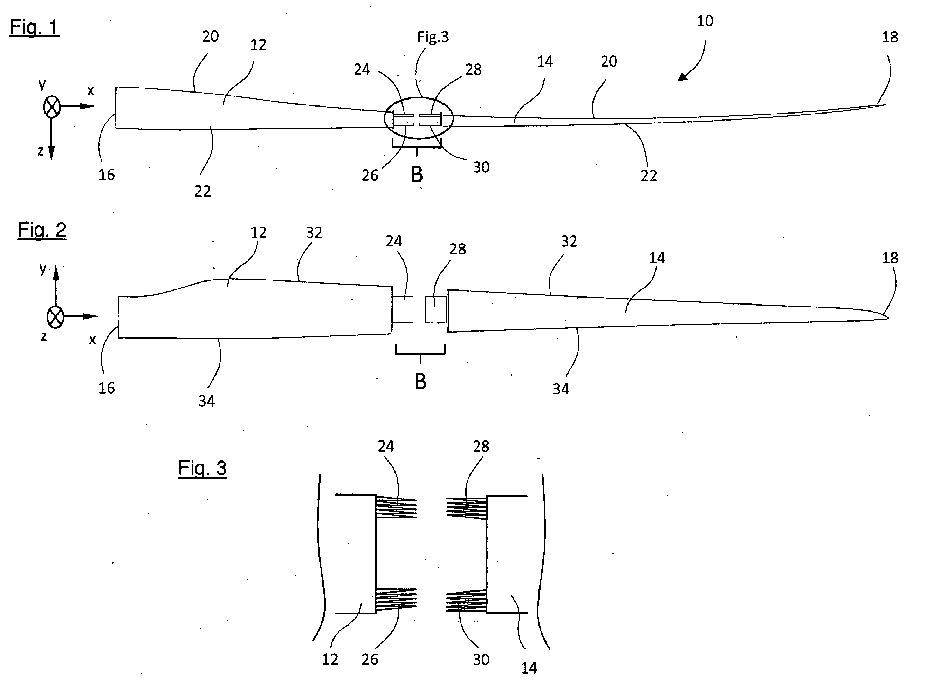

Das Windenergieanlagenrotorblatt 10 der Fig. 1 weist einen Längsabschnitt 12 und einen weiteren Längsabschnitt 14 auf, die in der Figur noch nicht miteinander verbunden, sondern in einem Abstand voneinander angeordnet sind. Der Längsabschnitt 12 erstreckt sich von einer Blattwurzel 16 bis zu einer Teilungsstelle B. Der weitere Längsabschnitt 14 erstreckt sich von dieser Teilungsstelle B bis zu einer Blattspitze 18.

Sowohl der Längsabschnitt 12 als auch der weitere Längsabschnitt 14 weisen jeweils eine Tragstruktur und einen Teil der aerodynamischen Hülle des Windenergieanlagenrotorblatts 10 auf. Eine Druckseite 20 des Windenergieanlagenrotorblatts 10 befindet sich in der Fig. 1 oben und wird zu einem Teil vom Längsabschnitt 12 und zu einem weiteren Teil vom weiteren Längsabschnitt 14 gebildet. Eine Saugseite 22 des Windenergieanlagenrotorblatts 10 befindet sich in der Fig. 1 unten und wird ebenfalls zu einem Teil von dem Längsabschnitt 12 und zu einem weiteren Teil von dem weiteren Längsabschnitt 14 gebildet.

Im Bereich der Teilungsstelle B nur andeutungsweise erkennbar sind vier Gurtsegmente 24 bis 30. Es sind dies ein druckseitiges Gurtsegment 24 und ein saugseitiges Gurtsegment 26 des Längsabschnitts 12 sowie ein druckseitiges Gurtsegment 28 und ein saugseitiges Gurtsegment 30 des weiteren Längsabschnitts 14.

In der Fig. 1 erkennt man, dass das Windenergieanlagenrotorblatt 10 insbesondere im Bereich des weiteren Längsabschnitts eine Vorbiegung zur Druckseite 20 hin aufweist, sodass die nah an der aerodynamischen Außenfläche verlaufenden Gurtsegmente 28, 30 ebenfalls eine Krümmung in Längsrichtung des weiteren Längsabschnitts 14 aufweisen. Auch die Gurtsegmente 24, 26 sind entsprechend dem Verlauf der Saugseite 20 und Druckseite 22 im Bereich des Längsabschnitts 12 in dessen Längsrichtung gekrümmt.

In der Ansicht der Fig. 2 ist der Blick auf die Druckseite 20 des Windenergieanlagenrotorblatts 10 aus der Fig. 1 gerichtet und der Längsabschnitt 12 und der weitere Längsabschnitt 14 sind im Übrigen, wie in der Fig. 1 gezeigt, in einem Abstand voneinander angeordnet. Man erkennt den Verlauf der Profilendkante 32 und der Profilnasenkante 34. Im Bereich der Teilungsstelle B erkennt man außerdem schematisch vereinfacht die hervorstehenden Enden des druckseitigen Gurtsegments 24 des Längsabschnitts 12 und des druckseitigen Gurtsegments 28 des weiteren Längsabschnitts 14.

In der zwar vergrößerten, dennoch weiterhin schematisch vereinfachten Darstellung der Fig. 3 erkennt man etwas genauer die im Bereich der Teilungsstelle B einander zugewandten Enden des Längsabschnitts 12 und des weiteren Längsabschnitts 14 und die daraus hervorstehenden Gurtsegmente 24 bis 30. Von den Gurtsegmenten 24 bis 30 sind im Wesentlichen jeweils Verbindungsabschnitte erkennbar, die eine Vielzahl von benachbart angeordneten Zähnen aufweisen. Sie sind komplementär geformt, sodass sie ineinander geschoben und miteinander verklebt werden können.

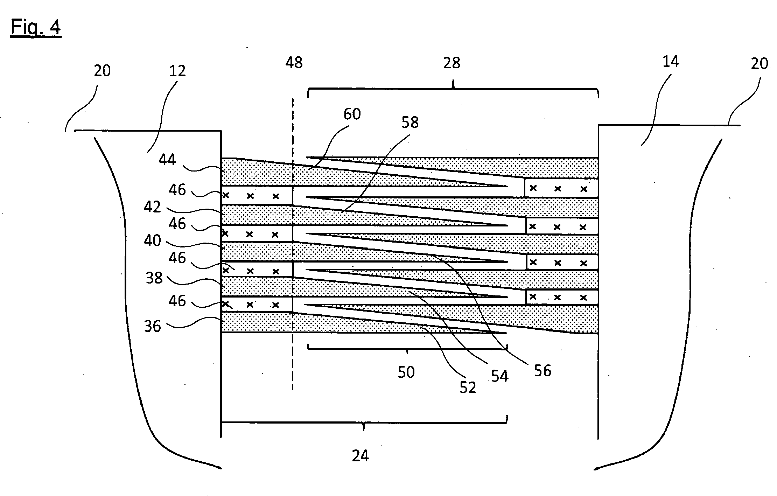

Fig. 4 zeigt die Teilungsstelle B in einer der Fig. 1 entsprechenden Ansicht in einer nochmals vergrößerten Darstellung im Bereich der druckseitigen Gurtsegmente 24, 28. Man erkennt, dass die beiden Gurtsegmente 24, 28 jeweils aus einer Vielzahl von Lagen von Verstärkungsfasern unterschiedlicher Typen aufgebaut sind.

Das druckseitige Gurtsegment 24 des Längsabschnitts 12 weist ein erstes Lagenpaket 36, eine zweites Lagenpaket 38, eine drittes Lagenpaket 40, eine viertes Lagenpaket 42 und ein fünftes Lagenpaket 44 auf, die jeweils Lagen mit Verstärkungsfasern eines ersten Fasertyps mit einer hohen Zugfestigkeit aufweisen. Im gezeigten Beispiel sind die Verstärkungsfasern dieser Lagen ausschließlich Kohlenstofffasern. Zwischen den Lagenpaketen 36 bis 44 ist jeweils ein weiteres Lagenpaket 46 von Verstärkungsfasern eines anderen Fasertyps mit geringerer Festigkeit, insbesondere Zugfestigkeit, dargestellt. Diese Verstärkungsfasern sind im gezeigten Beispiel ausschließlich Glasfasern. Alle genannten Lagenpakete weisen zusätzlich zu den Verstärkungsfasern ein Kunststoffmaterial auf, in das die Verstärkungsfasern eingebettet sind. Die weiteren Lagenpakete 46 enden, aus dem Inneren des Längsabschnitts 12 kommend, flächig an einer mit 48 bezeichneten Querschnittsebene, an der ein Verbindungsabschnitt 50 des Gurtsegments 24 beginnt. Die Lagen aus Kohlenstofffasern des Gurtsegments 28 enden vor der Querschnittsebene 48. Sie berühren die Glasfaserlagen des Gurtsegments 24 beim Fügeprozess nicht. Das Gleiche gilt für die Kohlenstofffaserlagen des Gurtsegments 24, welche die Glasfaserlagen des Gurtsegments 28 nicht berühren.

Bis zu der Querschnittsebene 48 hin weisen die Lagenpakete 36 bis 44 und die weiteren Lagenpakete 46 jeweils eine im Wesentlichen gleichmäßige Dicke auf, wobei die Dicke der Lagenpakete 36 bis 44 jeweils größer ist als die Dicke eines bzw. jedes weiteren Lagenpakets 46. Beginnend an der Querschnittsebene 48 nimmt die Dicke der Lagenpakete 36 bis 44 jeweils linear ab bis hin zum freien Ende des Verbindungsabschnitts 50. Dies wird durch eine gestaffelte Anordnung der einzelnen Lagen in den Lagenpaketen 36 bis 44 erreicht. Mit anderen Worten bildet jedes der Lagenpakete 36 bis 44 innerhalb des Verbindungsabschnitts 50 jeweils einen im dargestellten Längsschnitt etwa dreieckigen Zahn, also das erste Lagenpaket 36 einen ersten Zahn 52, das zweite Lagenpaket 38 einen zweiten Zahn 54, das dritte Lagenpaket 40 einen dritten Zahn 56, das vierte Lagenpaket 42 einen vierten Zahn 58 und das fünfte Lagenpaket 44 einen fünften Zahn 60. Ein von einem Lagenpaket gebildeter Zahn kann auch trapezförmig sein, insbesondere wenn die Anzahl der Lagen in den Lagenpaketen nicht auf Null ausläuft.

Das druckseitige Gurtsegment 28 des weiteren Längsabschnitts 14 weist einen komplementären Aufbau zu dem Gurtsegment 24 auf, das heißt es besteht ebenfalls aus fünf Lagenpaketen mit Kohlenstofffasern und vier weiteren, dazwischen angeordneten Lagenpaketen mit Glasfasern. Ebenfalls entsprechend dem Gurtsegment 24 weist das Gurtsegment 28 fünf Zähne auf, die ausschließlich von den Lagenpaketen mit den Kohlenstofffasern gebildet werden.

Zur Verbindung des Längsabschnitts 12 mit dem weiteren Längsabschnitt 14 ist vorgesehen, den Verbindungsabschnitt 50 des Gurtsegments 24 mit dem entsprechenden Verbindungsabschnitt des Gurtsegments 28 zu verkleben. Dadurch werden im Wesentlichen die einzelnen Lagenpakete mit den Kohlenstofffasern großflächig miteinander verbunden und es entsteht eine mehrschnittige Verbindung. Die weiteren Lagenpakete 46 erfüllen im Wesentlichen eine Funktion als Rissstopper.

Wie in der Fig. 4 im Zusammenhang mit der Fig. 1 erkennbar, verlaufen die einzelnen Lagenpakete im Wesentlichen parallel zur Druckseite 20 des Windenergieanlagenrotorblatts 10.

Es versteht sich, dass die Gurtsegmente 26, 30 auf der Saugseite 22 des Windenergieanlagenrotorblatts 10 aus Fig. 1 über eine entsprechende Verbindung verfügen. Weiter versteht sich, dass der gezeigte Aufbau der Gurtsegmente 24, 28 aus jeweils fünf. Lagenpaketen von Verstärkungsfasern und dazwischen angeordneten, weiteren Lagenpaketen eines anderen Fasertyps beispielhaft ist und sowohl eine größere als auch kleinere Anzahl von Lagenpaketen möglich ist.

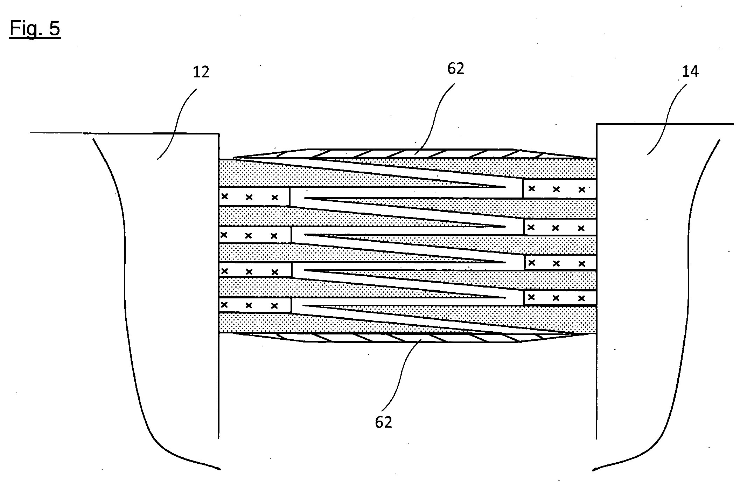

Zur Verbindung der Gurtsegmente 24 bis 30 gemäß der Figur 4 beim Zusammenfügen des Längsabschnitts 12 und des weiteren Längsabschnitts 14 ist vorgesehen, die in Fig. 4 gezeigten Klebespalte zwischen den einzelnen Zähnen vollständig mit Klebstoff zu füllen, insbesondere unter Zuhilfenahme von Überdruck. Hierzu können die zusammenzufügenden Gurtsegmente 24, 28 bzw. 26, 30 im Bereich der Teilungsstelle B jeweils gegenüber der Umgebung abgedichtet werden. Dies kann wahlweise unter Zuhilfenahme eines den Verbindungsbereich einschließenden Faserverbundkastens 62 erfolgen, wie in der Fig. 5 schematisch dargestellt. Der Faserverbundkasten 62 besteht aus einem Faserverbundmaterial, weist eine geringe Steifigkeit auf und umschließt die Verbindungsstelle der entsprechenden Gurtsegmente nach außen vollständig. Nach dem Aushärten des Klebstoffs kann der Faserverbundkasten 62 in der gezeigten Anordnung innerhalb des Windenergieanlagenrotorblatts 10 verbleiben. Durch den Faserverbundbkasten 62 können zusätzlich Spannungsspitzen und Steifigkeitssprünge zwischen der wenig steifen Klebschicht und den hochsteifen Kohlenstofffasern abgebaut werden.

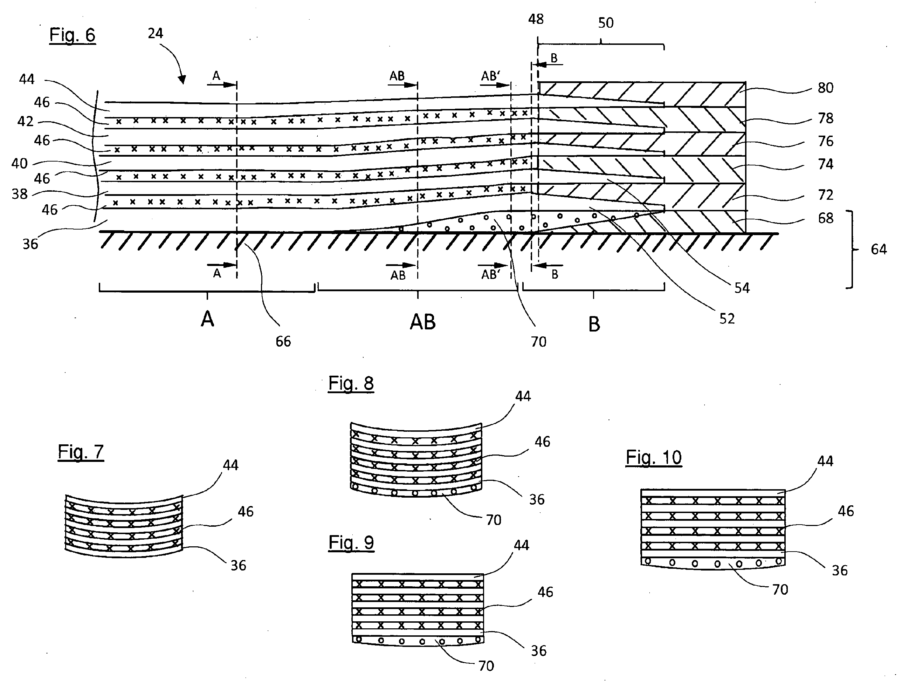

Anhand der Fig. 6 wird der Herstellungsprozess am Beispiel des Gurtsegments 24 näher erläutert. Die Fig. 6 zeigt einen Längsschnitt durch ein Ende dieses Gurtsegments 24 innerhalb eines Formwerkzeugs. Das Gurtsegment 24 weist einen in der Fig. 6 nur teilweise sichtbaren ersten Längsabschnitt A und einen Verbindungsabschnitt 50 im Bereich der Teilungsstelle B auf. Dazwischen befindet sich ein in der Fig. 6 mit AB gekennzeichneter Übergangsabschnitt.

Die Herstellung des Gurtsegments beginnt mit dem Bereitstellen eines ersten Formwerkzeugteils 64, das im Beispiel der Fig. 6 zweiteilig aufgebaut ist und eine Gurtform 66 aufweist, die insbesondere für die Herstellung eines Hauptgurts für ein einteiliges Windenergieanlagenrotorblatt verwendet werden kann, und ein im Bereich der Teilungsstelle B in diese Gurtform 66 eingelegtes Einlegeteil 68.

In das so gebildete erste Formwerkzeugteil 64 wird zunächst ein Kernmaterial 70 eingelegt, beispielsweise Kunststoff, Metall, Holz oder ein Faserverbundmaterial. Bei entsprechender Formgebung des ersten Formwerkzeugteils 64 kann auf dieses Kernmaterial 70 auch verzichtet werden, insbesondere wenn das erste Formwerkzeugteil 64 einteilig ausgebildet ist und nicht wie im hier gezeigten Beispiel eine herkömmliche Gurtform 66 verwendet werden soll.

Anschließend wird ein erstes Lagenpaket 36 von Verstärkungsfasern in das Formwerkzeug eingelegt. Dieses erste Lagenpaket 36 besteht, ebenso wie alle später eingelegten Lagenpakete aus Lagen von mit einem Kunststoffmaterial vorimprägnierten Verstärkungsfasern, sogenannten Prepregs. Es versteht sich, dass für das erste Lagenpaket 36 ebenso wie für alle weiteren Lagenpakete mehrere solcher Prepreg-Lagen verwendet werden können, insbesondere mit unterschiedlichen Längen. Diese bilden dann mehrere Lagen innerhalb des jeweiligen Lagenpakets.

Nach dem Einlegen der Verstärkungsfasern des ersten Lagenpakets 36 wurde ein zweites Formwerkzeugteil 72 wie in der Fig. 6 gezeigt angeordnet und relativ zum ersten Formwerkzeugteil 64 ausgerichtet und am ersten Formwerkzeugteil 64 befestigt. Dabei entsteht zwischen dem ersten Formwerkzeugteil 64 und dem zweiten Formwerkzeugteil 72 ein Zwischenraum, der bereits mit den Verstärkungsfasern des ersten Lagenpakets 36 gefüllt ist. Die Verstärkungsfasern des ersten Lagenpakets 36 bilden in diesem Bereich später den ersten Zahn 52 aus.

Anschließend wird ein weiteres Lagenpaket 46 aus vorimprägnierten Glasfasern in das Formwerkzeug eingelegt, vorzugsweise wiederum in Form einer oder mehrerer Prepreg-Lagen. Dieses weitere Lagenpaket 46 wird bis an die in der Querschnittsebene 48 angeordnete vordere Fläche des zweiten Formwerkzeugteils 72 herangelegt, wo sie flächig endet.

Dann wird das zweite Lagenpaket 38 von Verstärkungsfasern in die Form eingelegt. Es folgt ein drittes Formwerkzeugteil 74, das relativ zu dem zweiten Formwerkzeugteil 72 und/oder zu dem ersten Formwerkzeugteil 64 ausgerichtet und daran befestigt wird. Dabei wird zwischen dem zweiten Formwerkzeugteil 72 und dem dritten Formwerkzeugteil 74 wiederum ein Zwischenraum ausgebildet, in dem bereits die Verstärkungsfasem des zweiten Lagenpakets 38 angeordnet sind, welche später den zweiten Zahn 54 bilden. Es folgt ein weiteres Lagenpaket 46, das oberhalb des zweiten Lagenpakets 38 in das Formwerkzeug eingelegt und bis an die in der Querschnittsebene 48 angeordnete vordere Fläche des dritten Formwerkzeugteils 74 herangeführt wird.

Der Vorgang wird entsprechend für das dritte Lagenpaket 40 und das vierte Formwerkzeugteil 76, für das vierte Lagenpaket 42 und das fünfte Formwerkzeugteil 78 sowie für das fünfte Lagenpaket 44 und ein sechstes Formwerkzeugteil 80 wiederholt. Anschließend, das heißt nachdem der in der Fig. 6 gezeigte Aufbau erreicht ist und alle Materiallagen des Gurtsegments 24 in dem Fomwerkzeug angeordnet sind, wird das Gurtsegment 24 ausgehärtet, wahlweise unter Wärmezufuhr. Hierzu kann gegebenenfalls das Formwerkzeug nach oben verschlossen werden, beispielsweise mit einer Vakuumfolie. Auch eine Kompaktierung der unterschiedlichen Materiallagen auf andere Weise ist möglich.

Mithilfe des erläuterten Verfahrens können grundsätzlich beliebige Geometrien des Gurtsegments 24 verwirklicht und in einen zur Verbindung mit dem weiteren Längsabschnitt 14 geeigneten Verbindungsabschnitt 50 überführt werden. Insbesondere kann das Gurtsegment 24 im Bereich seines ersten Längsabschnitts A eine mehrfach gekrümmte Geometrie aufweisen, was eine Anordnung des Gurtsegments 24 unmittelbar angrenzend an die aerodynamische Hülle des Längsabschnitts 12 ermöglicht. Hierdurch wird insbesondere ein maximaler Abstand zwischen dem druckseitigen Gurtsegment und einem gegenüberliegend angeordneten, saugseitigen Gurtsegment 26 erreicht. Das führt zu einer optimalen Tragfähigkeit (Festigkeit und Steifigkeit) der Gurte, da so ein maximaler Randfaserabstand zur Rotorblattbiegeachse gewährleistet werden kann. Anhand der Querschnittsdarstellungen der Fig. 7 bis 10 soll die mögliche Krümmung des Gurtsegments 24 beispielhaft näher erläutert werden.

Fig. 7 zeigt einen Querschnitt innerhalb des ersten Längsabschnitts A, nämlich an der in der Fig. 6 mit A-A bezeichneten Stelle. Man erkennt die Lagenpakete 36 bis 44 und die jeweils dazwischen angeordneten weiteren Lagen 46. In der gezeigten Querschnittsebene sind sämtliche Lagen in einer Querrichtung des Gurtsegments 24 gekrümmt, entsprechend der im Bereich des druckseitigen Gurtsegments 24 gewünschten Krümmung der Druckseite 20 des Windenergieanlagenrotorblatts 10.

Fig. 8 zeigt einen Querschnitt durch das Gurtsegment 24 an der in der Fig. 6 mit AB-AB bezeichneten Stelle innerhalb des Übergangsabschnitts AB. Man erkennt eine weiterhin vorhandene Krümmung der Lagenpakete 36 bis 44 und der dazwischen angeordneten Lagen 46. Unterhalb des untersten bzw. äußersten, ersten Lagenpakets 36 ist eine weitere Lage aus dem Kernmaterial 70 gezeigt.

Fig. 9 zeigt einen weiteren Querschnitt an der in der Fig. 6 mit AB'-AB' bezeichneten Stelle, die sich innerhalb des Übergangsabschnitts AB in unmittelbarer Nähe zu der Teilungsstelle B bzw. dem Verbindungsabschnitt 50 befindet. In diesem Bereich weist nur noch die aus dem Kernmaterial 70 bestehende, unterste Lage an ihrer Unter- bzw. Außenseite eine dem Verlauf der Druckseite 20 entsprechende Krümmung auf. Alle übrigen Lagenpakete 36 bis 44 und weiteren Lagen 46 sind in der Querschnittsrichtung nicht mehr gekrümmt, sondern eben. In der Längsrichtung des Gurtsegments 24, also senkrecht zu der gezeigten Querschnittsebene, können die einzelnen Lagenpakete sowie die unten erkennbare Außenfläche und die oben erkennbare Innenfläche des Gurtsegments 24 weiterhin gekrümmt sein. Dies gilt innerhalb des Übergangsabschnitts und ebenso innerhalb des Verbindungsabschnitts.

Einen entsprechenden Verlauf der einzelnen Lagenpakete zeigt auch die Fig. 10, die einen Querschnitt an der in der Fig. 6 mit B-B bezeichneten Stelle innerhalb der Teilungsstelle B, jedoch noch außerhalb des Verbindungsabschnitts 50, zeigt. Man erkennt im Vergleich zur Fig. 9, dass das Gurtsegment 24 dort denselben Querschnitt aufweist wie innerhalb des Übergangsabschnitts AB nahe der Teilungsstelle B. Insbesondere gibt es keine Querschnittsaufweitung zur Teilungsstelle B hin.

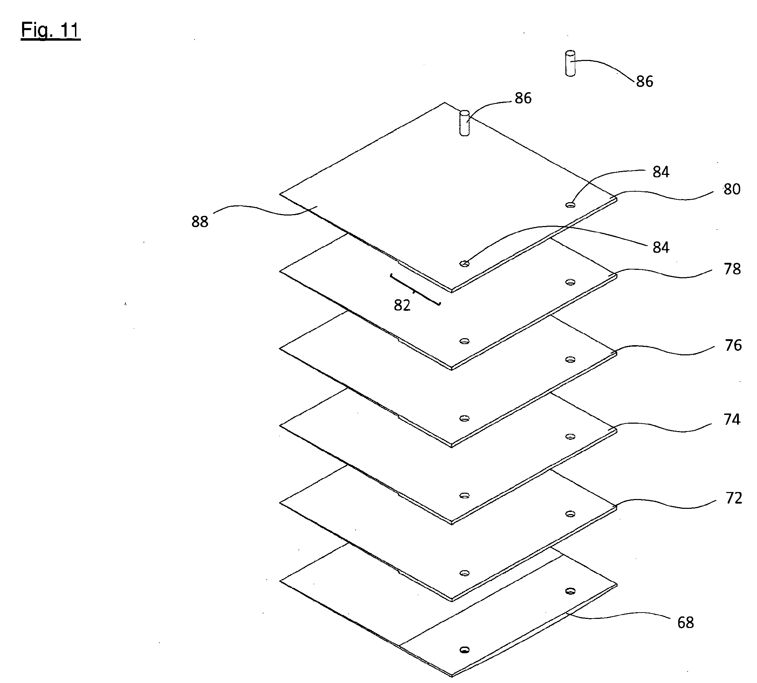

Fig. 11 zeigt in einer perspektivischen Explosionsdarstellung das zum ersten Formwerkzeugteil 64 gehörende Einlegeteil 68 sowie oberhalb davon das zweite Formwerkzeugteil 72, das dritte Formwerkzeugteil 74, das vierte Formwerkzeugteil 76, das fünfte Formwerkzeugteil 78 und das sechste Formwerkzeugteil 80. Die Formwerkzeugteile 72 bis 80 sind identisch. Sie weisen jeweils einen streifenförmigen ersten Abschnitt 82 mit gleichmäßiger Dicke auf. Innerhalb dieser streifenförmigen Abschnitte 82 befinden sich jeweils zwei Bohrungen 84, durch die zwei Stifte 86 durchgeführt werden können, um sämtliche Formwerkzeugteile in der vorgesehenen relativen Anordnung zueinander zu fixieren. Insgesamt sind das Einlegeteil 68 und die Formwerkzeugteile 72 bis 80 plattenförmig ausgebildet, wobei sich an die streifenförmigen Abschnitte 82 jeweils ein im Längsschnitt dreieckiger Abschnitt 88 anschließt. Zwischen diesen Abschnitten 88 sind die einzelnen Zwischenräume, in denen die Zähne der Gurtsegmente entstehen, ausgebildet.

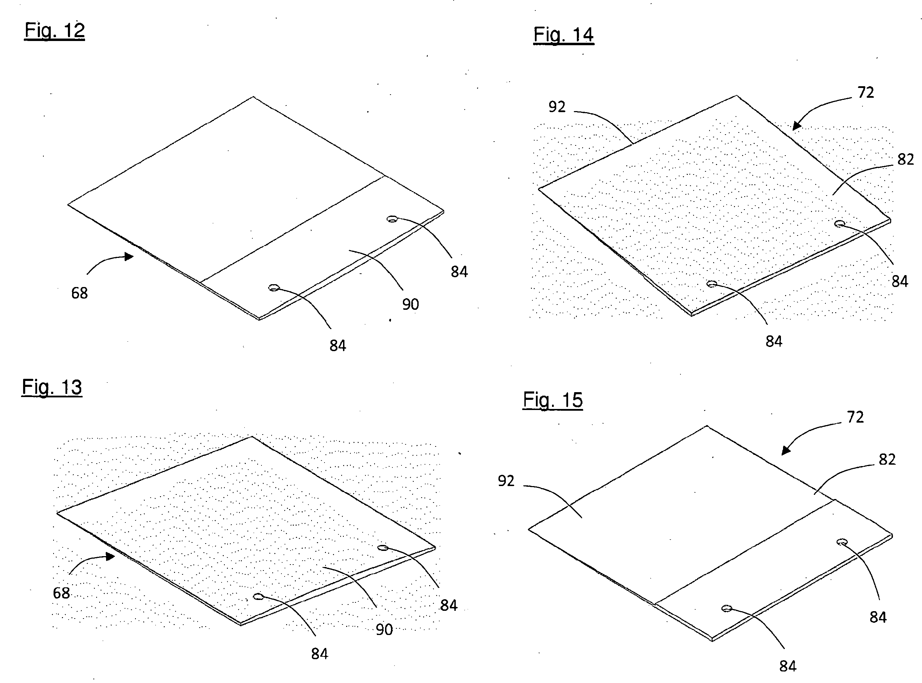

Weitere Einzelheiten der Formwerkzeugteile sind besser in den Fig. 12 bis 15 zu erkennen. Fig. 12 und 13 zeigen das Einlegeteil 68 in einer Ansicht von oben (Fig. 12) und einer Ansicht von unten (Fig. 13). Man erkennt einen zu den streifenförmigen Abschnitten 82 der weiteren Formwerkzeugteile 72 bis 80 korrespondierenden, ebenfalls streifenförmigen Abschnitt 90, der jedoch keine gleichmäßige Dicke aufweist. Dieser Abschnitt 90 ist ebenfalls mit zwei Bohrungen 84 zur Aufnahme der Stifte 86 versehen. Die gesamte Unterseite des Einlegeteils 68 ist in Querrichtung gekrümmt ausgebildet, sodass sie in die entsprechend der Druckseite 20 gekrümmte Gurtform 66 eingelegt werden kann und überall flächig an dieser anliegt. Zusätzlich ist die Unterseite des Einlegeteils 68 auch in der Längsrichtung gekrümmt, ebenfalls entsprechend dem Verlauf der Druckseite 20 des Windenergieanlagenrotorblatts 10.

Die Fig. 14 und 15 zeigen eines der weiteren Formwerkzeugteile 72 bis 80, ebenfalls in einer perspektivischen Ansicht auf die Oberseite (Fig. 14) und auf die Unterseite (Fig. 15). Man erkennt die bereits erläuterten streifenförmigen Abschnitte 82 mit den Bohrungen 84 sowie die sich daran anschließenden, im Längsschnitt dreieckigen Abschnitte 88, die an einer von dem streifenförmigen Abschnitt 82 entfernten Kante 92 dünn auslaufen. Die Ober- und Unterseite des Abschnitts 88 sind nicht gekrümmt, sondern völlig eben, sodass der von den zwischen derartigen Formwerkzeugteilen ausgebildeten Zähnen gebildete Verbindungsabschnitt 50 problemlos mit einem komplementär ausgebildeten Verbindungsabschnitt zusammengesetzt werden kann.

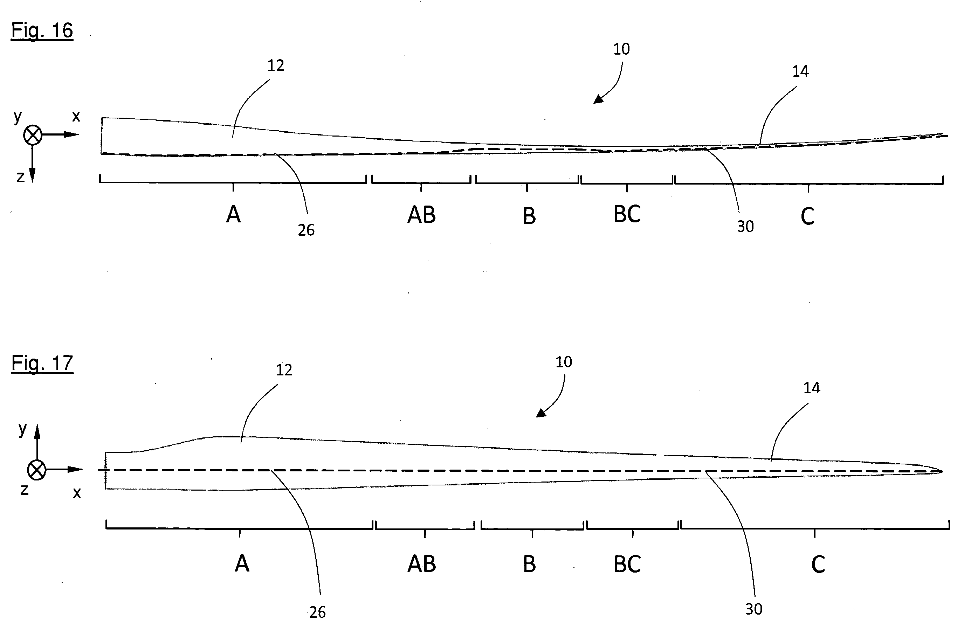

Fig. 16 zeigt eine schematische Ansicht auf ein Windenergieanlagenrotorblatt mit Blick auf die Nasenkante, welches aus einem Längsabschnitt 12 und einem weiteren Längsabschnitt 14 zusammengefügt ist. Gestrichelt angedeutet ist darin der Verlauf des saugseitigen Hauptgurts, der aus einem saugseitigen Gurtsegment 26 des Längsabschnitt 12 und einem saugseitigen Gurtsegment 30 des weiteren Längsabschnitts 14 besteht. Das Gurtsegment 26 weist einen ersten Längsabschnitt A, einen Übergangsabschnitt AB und einen Verbindungsabschnitt im Bereich der Teilungsstelle B auf. Das Gurtsegment 30 weist einen ersten Längsabschnitt C, einen Übergangsabschnitt BC und ebenfalls einen Verbindungsabschnitt im Bereich der Teilungsstelle B auf. Im Bereich der ersten Längsabschnitte A bzw. C sind die Gurtsegmente 26, 30 zweifach gekrümmt, das heißt sowohl entlang der Längsrichtung des Windenergieanlagenrotorblatts 10 als auch quer dazu. Im Bereich der Teilungsstelle B, in dem die Verbindungsabschnitte 50 der Gurtsegmente 26, 30 angeordnet sind, weisen diese keine Krümmung auf, sodass ein Zusammenfügen problemlos möglich ist. In den Übergangsabschnitten AB bzw. BC geht die zweifach gekrümmte Geometrie in den nicht gekrümmten Verlauf im Bereich der Teilungsstelle B über.

Fig. 17 zeigt eine weitere schematische Ansicht auf das Windenergieanlagenrotorblatt 10 aus Fig. 16, diesmal mit Blick auf die Druckseite. Man erkennt, dass der aus den Gurtsegmenten 26, 30 gebildete, saugseitige Hauptgurt in der gezeigten Ebene nicht gekrümmt ist. Eine zusätzliche Krümmung, insbesondere bei einem leicht sichelförmigen Windenergieanlagenrotorblatt 10, wäre jedoch möglich.

### Liste der verwendeten Bezugszeichen:

- 10: Windenergieanlagenrotorblatt
- 12: Längsabschnitt
- 14: weiterer Längsabschnitt
- 16: Blattwurzel
- 18: Blattspitze
- 20: Druckseite
- 22: Saugseite
- 24: druckseitiges Gurtsegment des Längsabschnitts 12
- 26: saugseitiges Gurtsegment des Längsabschnitts 12
- 28: druckseitiges Gurtsegment des weiteren Längsabschnitts 14
- 30: saugseitiges Gurtsegment des weiteren Längsabschnitts 14
- 32: Profilendkante
- 34: Profilnasenkante
- 36: erstes Lagenpaket
- 38: zweites Lagenpaket
- 40: drittes Lagenpaket
- 42: viertes Lagenpaket
- 44: fünftes Lagenpaket
- 46: weiteres Lagenpaket
- 48: Querschnittsebene
- 50: Verbindungsabschnitt
- 52: erster Zahn
- 54: zweiter Zahn
- 56: dritter Zahn
- 58: vierter Zahn
- 60: fünfter Zahn
- 62: Faserverbundkasten
- 64: erstes Formwerkzeugteil
- 66: Gurtform
- 68: Einlegeteil
- 70: Kernmaterial
- 72: zweites Formwerkzeugteil
- 74: drittes Formwerkzeugteil
- 76: viertes Formwerkzeugteil
- 78: fünftes Formwerkzeugteil
- 80: sechstes Formwerkzeugteil
- 82: streifenförmiger Abschnitt
- 84: Bohrung
- 86: Stift
- 88: im Längsschnitt dreieckiger Abschnitt
- 90: streifenförmiger Abschnitt
- 92: Kante

## Patentansprüche

1. Verfahren zur Herstellung eines Gurtsegments (24) für ein Windenergieanlagenrotorblatt (10), wobei das Windenergieanlagenrotorblatt (10) aus einem Längsabschnitt (12), der das Gurtsegment (24) aufweist, und mindestens einem weiteren Längsabschnitt (14), der ein weiteres Gurtsegment (28) aufweist, zusammengefügt wird, wobei das Gurtsegment (24) in einem Formwerkzeug hergestellt wird und einen Verbindungsabschnitt (50) zur Verbindung mit dem weiteren Gurtsegment (28) aufweist und **dadurch gekennzeichnet, dass** das Verfahren die folgenden Schritte umfasst:
a) Bereitstellen eines ersten Formwerkzeugteils (64),
b) Anordnen eines ersten Lagenpakets (36) von Verstärkungsfasern in dem ersten Formwerkzeugteil (64) und Anordnen eines zweiten Formwerkzeugteils (72), so dass zwischen dem ersten Formwerkzeugteil (64) und dem zweiten Formwerkzeugteil (72) ein erster Zwischenraum ausgebildet ist, in dem ein Teil des ersten Lagenpakets (36) der Verstärkungsfasern angeordnet ist,
c) Anordnen eines zweiten Lagenpakets (38) von Verstärkungsfasern und Anordnen eines dritten Formwerkzeugteils (74), so dass zwischen dem dritten Formwerkzeugteil (74) und dem zweiten Formwerkzeugteil (72) ein zweiter Zwischenraum ausgebildet ist, in dem ein Teil des zweiten Lagenpakets (38) der Verstärkungsfasern angeordnet ist,
d) Aushärten eines die Verstärkungsfasern umgebenden Kunststoffmaterials, und
e) Entformen des Gurtsegments (24),
wobei der erste und zweite Zwischenraum so geformt und relativ zueinander angeordnet sind, dass die darin gefertigten Abschnitte des Gurtsegments (24) den Verbindungsabschnitt (50) zur Verbindung mit dem weiteren Verbindungsabschnitt des weiteren Gurtsegments (28) bilden.

2. Verfahren nach Anspruch 1, **dadurch gekennzeichnet, dass** beim Anordnen des zweiten und dritten Formwerkzeugteils (72, 74) eine Ausrichtung und/oder Befestigung des zweiten und/oder dritten Formwerkzeugteils (72, 74) an einem der zuvor angeordneten Formwerkzeugteile erfolgt.

3. Verfahren nach Anspruch 1 oder 2, **dadurch gekennzeichnet, dass** das erste und zweite Lagenpaket (36, 38, 40) der Verstärkungsfasern jeweils einen ersten Fasertyp aufweisen und dass zwischen dem ersten und zweiten Lagenpaket (36, 38) ein weiteres Lagenpaket (46) von Verstärkungsfasern angeordnet wird, das einen zweiten Fasertyp aufweist, wobei der erste Fasertyp eine höhere Festigkeit und/oder eine höhere Steifigkeit aufweist als der zweite Fasertyp und/oder das erste und zweite Lagenpaket (36, 38, 40) jeweils eine größere Dicke aufweisen als das weitere Lagenpaket (46).

4. Verfahren nach Anspruch 3, **dadurch gekennzeichnet, dass** das mindestens eine weitere Lagenpaket (46) so in das Formwerkzeug eingelegt wird, dass es in keinen der Zwischenräume hineinragt.

5. Verfahren nach einem der Ansprüche 1 bis 4, **dadurch gekennzeichnet, dass** das erste und zweite Lagenpaket (36, 38) der Verstärkungsfasern jeweils eine Vielzahl von Lagen von Verstärkungsfasern aufweisen, wobei die einzelnen Lagen unterschiedlich weit in den betreffenden Zwischenraum hinein eingelegt werden.

6. Verfahren nach einem der Ansprüche 1 bis 5, **dadurch gekennzeichnet, dass** beim Entformen des Gurtsegments (24) das zweite und/oder dritte Formwerkzeugteil (72, 74) getrennt von dem ersten Formwerkzeugteil (64) von dem Gurtsegment (24) entfernt werden.

7. Formwerkzeug zur Herstellung eines Gurtsegments (24) für ein Windenergieanlagenrotorblatt (10), **dadurch gekennzeichnet, dass** das Formwerkzeug Folgendes aufweist:
• ein erstes Formwerkzeugteil (64), ein zweites Formwerkzeugteil (72) und ein drittes Formwerkzeugteil (74),
• Mittel, mit denen die Formwerkzeugteile (64, 72, 74, 76, 78, 80) relativ zueinander in einer vorgegebenen Anordnung angeordnet und befestigt werden können, so dass zwischen dem ersten Formwerkzeugteil (64) und dem zweiten Formwerkzeugteil (72) ein erster Zwischenraum und zwischen dem zweiten Formwerkzeugteil (74) und dem dritten Formwerkzeugteil (72) ein zweiter Zwischenraum ausgebildet ist,
• wobei die Zwischenräume so geformt und relativ zueinander angeordnet sind, dass darin gefertigte Abschnitte des Gurtsegments einen Verbindungsabschnitt (50) zur Verbindung mit einem weiteren Verbindungsabschnitt eines weiteren Gurtsegments bilden.

8. Formwerkzeug nach Anspruch 7, **dadurch gekennzeichnet, dass** das erste Formwerkzeugteil (64) eine Innenseite mit einer Länge aufweist, die größer oder gleich der Länge des Gurtsegments (24) ist.

9. Formwerkzeug nach Anspruch 8, **dadurch gekennzeichnet, dass** die Innenseite in einer Längsrichtung des ersten Formwerkzeugteils (64) und/oder in einer Querrichtung des ersten Formwerkzeugteils (64) gekrümmt ist.

10. Formwerkzeug nach einem der Ansprüche 7 bis 9, **dadurch gekennzeichnet, dass** die Mittel zur Anordnung und/oder Befestigung der Formwerkzeugteile (64, 72, 74, 76, 78, 80) Bohrungen (84), Nuten oder Ausnehmungen und in diese eingreifende Bolzen, Rippen oder Vorsprünge aufweisen.

11. Formwerkzeug nach einem der Ansprüche 7 bis 10, **dadurch gekennzeichnet, dass** das erste Formwerkzeugteil (64) eine Gurtform (66) aufweist und ein in die Gurtform (66) einzulegendes Einlegeteil (68), wobei die Unterseite des Einlegeteils (68) komplementär zur einer Innenfläche der Gurtform (66) ausgebildet ist.

12. Formwerkzeug nach einem der Ansprüche 7 bis 11, **dadurch gekennzeichnet, dass** das zweite und dritte Formwerkzeugteil (72, 74) plattenförmig ausgebildet sind und jeweils einen Abschnitt mit gleichmäßiger Dicke aufweisen, so dass sie blockartig aufeinandergestapelt werden können.

## Claims

1. A method for producing a spar cap segment (24) for a wind turbine rotor blade (10), wherein the wind turbine rotor blade (10) is assembled from a longitudinal section (12), which comprises the spar cap segment (24), and at least one additional longitudinal section (14), which comprises an additional segment (28), wherein the spar cap segment (24) is produced in a forming tool and comprises a connecting section (50) for connecting to the additional spar cap segment (28), and **characterized in that** the method includes the following steps:
a) providing a first forming tool part (64),
b) arranging a first layer stack (36) of reinforcing fibers in the first forming tool part (64) and arranging a second forming tool part (72), so that a first intermediate space is configured between the first forming tool part (64) and the second forming tool part (72), in which intermediate space a part of the first layer stack (36) of the reinforcing fibers is arranged,
c) arranging a second layer stack (38) of reinforcing fibers and arranging a third forming tool part (74), so that a second intermediate space is configured between the third forming tool part (74) and the second forming tool part (72), in which intermediate space a part of the second layer stack (38) of the reinforcing fibers is arranged,
d) curing a plastic material surrounding the reinforcing fibers, and
e) demolding the spar cap segment (24),
wherein the first and second intermediate spaces are formed and arranged relative to one another such that the sections of the spar cap segment (24) produced therein form the connecting section (50) for connecting to the additional connecting section of the additional spar cap segment (28).

2. The method according to claim 1, **characterized in that** in arranging the second and third forming tool part (72, 74), the second and/or third forming tool part (72, 74) is/are aligned with and/or fixed to one of the previously arranged forming tool parts.

3. The method according to claim 1 or 2, **characterized in that** the first and second layer stack (36, 38, 40) of the reinforcing fibers each comprise a first type of fiber and that an additional layer stack (46) of reinforcing fibers is arranged between the first and second layer stack (36, 38), which layer stack comprises a second type of fiber, wherein the first type of fiber has a higher strength and/or a higher stiffness than the second type of fiber and/or the first and second layer stack (36, 38, 40) each have a greater thickness than the additional layer stack (46).

4. The method according to claim 3, **characterized in that** the at least one additional layer stack (46) is inserted into the forming tool such that it does not protrude into any of the intermediate spaces.

5. The method according to any one of claims 1 to 4, **characterized in that** the first and second layer stack (36, 38) of the reinforcing fibers each comprise a plurality of layers of reinforcing fibers, wherein the individual layers are inserted to varying degrees into the relevant intermediate space.

6. The method according to any one of claims 1 to 5, **characterized in that** during demolding of the spar cap segment (24), the second and/or third forming tool part (72, 74) are removed separately from the first forming tool (64) from the spar cap segment (24).

7. A forming tool for producing a spar cap segment (24) for a wind turbine rotor blade (10), **characterized in that** the forming tool comprises the following:
• a first forming tool part (64), a second forming tool part (72) and a third forming tool part (74),
• means with which the forming tool parts (64, 72, 74, 76, 78, 80) can be arranged and fixed relative to one another in a given arrangement, so that a first intermediate space is configured between the first forming tool part (64) and the second forming tool part (72), and a second intermediate space is configured between the second forming tool part (74) and the third forming tool part (72),
• wherein the intermediate spaces are formed and arranged relative to one another such that sections of the spar cap segment produced therein form a connecting section (50) for connecting to an additional connecting section of an additional spar cap segment.

8. The forming tool according to claim 7, **characterized in that** the first forming tool part (64) comprises an inside having a length which is longer than or equal to the length of the spar cap segment (24).

9. The forming tool according to claim 8, **characterized in that** the inside is curved in a longitudinal direction of the first forming tool part (64) and/or in a transverse direction of the first forming tool part (64).

10. The forming tool according to any one of claims 7 to 9, **characterized in that** the means for arranging and/or fixing the forming tools parts (64, 72, 74, 76, 78, 80) comprise holes (84), grooves or recesses and bolts, ribs or projections engaging therein.

11. The forming tool according to any one of claims 7 to 10, **characterized in that** the first forming tool part (64) comprises a spar cap form (66) and an insert to be inserted into the spar cap form (66), wherein the underside of the insert (68) is configured complementarily to an inner face of the spar cap form (66).

12. The forming tool according to any one of claims 7 to 11, **characterized in that** the second and third forming tool part (72, 74) are configured in the form of a plate and each comprise a section having a uniform thickness, so that they can be stacked on top of one another in the manner of a block.

## Revendications

1. Procédé pour la fabrication d'un segment de membrure (24) pour une pale de rotor d'installation éolienne (10), dans lequel la pale de rotor d'installation éolienne (10) est assemblée à partir d'une section longitudinale (12) présentant le segment de membrure (24), et d'au moins une autre section longitudinale (14) présentant un autre segment de membrure (28), le segment de membrure (24) étant réalisé dans un outil de formage et présentant une section de liaison (50) destinée à être reliée à l'autre segment de membrure (28), et **caractérisé en ce que** le procédé comporte les étapes suivantes :
a) mise à disposition d'une première pièce d'outil de formage (64),
b) disposition d'un premier paquet de couches (36) de fibres de renforcement dans la première pièce d'outil de formage (64), et disposition d'une deuxième pièce d'outil de formage (72) de manière à former un premier interstice entre la première pièce d'outil de formage (64) et la deuxième pièce d'outil de formage (72), dans lequel est disposée une partie du premier paquet de couches (36) de fibres de renforcement,
c) disposition d'un deuxième paquet de couches (38) de fibres de renforcement et disposition d'une troisième pièce d'outil de formage (74) de manière à former un deuxième interstice entre la troisième pièce d'outil de formage (74) et la deuxième pièce d'outil de formage (72), dans lequel est disposée une partie du deuxième paquet de couches (38) de fibres de renforcement,
d) durcissement d'une matière plastique entourant les fibres de renforcement, et
e) démoulage du segment de membrure (24),
dans lequel les premier et deuxième interstices sont formés et disposés de telle façon par l'un rapport à l'autre, que les sections du segment de membrure (24) réalisées dans ceux-ci forment la section de liaison (50) destinée à être reliée à la section de liaison de l'autre segment de membrure (28).

2. Procédé selon la revendication 1, **caractérisé en ce que** lors de la disposition des deuxième et troisième pièces d'outil de formage (72, 74), une orientation et/ou une fixation de la deuxième et/ou de la troisième pièce d'outil de formage (72, 74) est/sont réalisée(s) sur l'une des pièces d'outil de formage disposées précédemment.

3. Procédé selon la revendication 1 ou 2, **caractérisé en ce que** les premier et deuxième paquets de couches (36, 38, 40) de fibres de renforcement présentent respectivement un premier type de fibres, et **en ce qu'**un autre paquet de couches (46) de fibres de renforcement est disposé entre les premier et deuxième paquets de couches (36, 38), lequel présente un deuxième type de fibres, le premier type de fibres présentant une plus grande résistance et/ou une plus grande rigidité que le deuxième type de fibres, et/ou les premier et deuxième paquets de couches (36, 38, 40) présentant respectivement une épaisseur supérieure à celle de l'autre paquet de couches (46).

4. Procédé selon la revendication 3, **caractérisé en ce que** l'au moins un autre paquet de couches (46) est introduit dans l'outil de formage de manière à ne faire saillie dans aucun des interstices.

5. Procédé selon l'une des revendications 1 à 4, **caractérisé en ce que** les premier et deuxième paquets de couches (36, 38) de fibres de renforcement présentent respectivement une pluralité de couches de fibres de renforcement, les différentes couches étant introduites à des profondeurs différentes dans l'interstice correspondant.

6. Procédé selon l'une des revendications 1 à 5, **caractérisé en ce que** lors du démoulage du segment de membrure (24), la deuxième et/ou la troisième pièce d'outil de formage (72, 74) sont détachées du segment de membrure (24) séparément de la première pièce d'outil de formage (64).

7. Outil de formage pour la fabrication d'un segment de membrure (24) pour une pale de rotor d'installation éolienne (10), **caractérisé en ce que** l'outil de formage présente :
• une première pièce d'outil de formage (64), une deuxième pièce d'outil de formage (72) et une troisième pièce d'outil de formage (74),
• des moyens permettant de disposer et de fixer les pièces d'outil de formage (64, 72, 74, 76, 78, 80) les unes par rapport aux autres selon une disposition prédéfinie, de manière à former un premier interstice entre la première pièce d'outil de formage (64) et la deuxième pièce d'outil de formage (72) et un deuxième interstice entre la deuxième pièce d'outil de formage (74) et la troisième pièce d'outil de formage (72),
• les interstices étant formés de telle façon l'un par rapport à l'autre, que des sections du segment de membrure réalisées dans ceux-ci forment une section de liaison (50) destinée à être reliée à une autre section de liaison d'un autre segment de membrure.

8. Outil de formage selon la revendication 7, **caractérisé en ce que** la première pièce d'outil de formage (64) présente un côté intérieur d'une longueur supérieure ou égale à la longueur du segment de membrure (24).

9. Outil de formage selon la revendication 8, **caractérisé en ce que** le côté intérieur est courbé dans une direction longitudinale de la première pièce d'outil de formage (64) et/ou dans une direction transversale de la première pièce d'outil de formage (64).

10. Outil de formage selon l'une des revendications 7 à 9, **caractérisé en ce que** les moyens destinés à disposer et/ou à fixer les pièces d'outil de formage (64, 72, 74, 76, 78, 80) présentent des perçages (84), des rainures ou des évidements ainsi que des boulons, des nervures ou des saillies s'engageant dans ceux-ci.

11. Outil de formage selon l'une des revendications 7 à 10, **caractérisé en ce que** la première pièce d'outil de formage (64) présente une forme de courroie (66) ainsi qu'une pièce d'insertion (68) à insérer dans la forme de courroie (66), le côté inférieur de la pièce d'insertion (68) étant formé de façon complémentaire à une surface intérieure de la forme de courroie (66).

12. Outil de formage selon l'une des revendications 7 à 11, **caractérisé en ce que** les deuxième et troisième pièces d'outil de formage (72, 74) sont conçues en forme de plaques et présentent respectivement une section avec une épaisseur homogène, de manière à pouvoir être empilées l'une sur l'autre comme un bloc.
